# EUROPEAN PATENT APPLICATION

(11) **EP 2 198 759 A1**
(43) Date of publication of application: **23.06.2010**
(21) Application number: 09179744.9
(22) Date of filing: 17.12.2009
(51) Int. Cl.: A47J 37/06

(54) **Heating plate particularly for cooking plates, frying pans, pasta cookers, fryers and devices for professional cooking in general**

(30) Priority: 22.12.2008 IT MI20082286
(71) Applicant: Nuova Inoxtecnica S.R.L., 28066 Galliate (NO) (IT)
(72) Inventor: Fusi, Giuseppe, 28066, Galliate No (IT)
(74) Representative: Modiano, Micaela Nadia

(57) **Abstract**

A heating plate (1), particularly for cooking plates, frying pans, pasta cookers, fryers and professional cooking devices in general, comprising a plate body (2), made of heat conducting material, on one face of which an electric resistor (10) is connected, the heating plate (1) further comprising, on one face of the plate (2), a slot (20) for the at least partial accommodation of the electric resistor (10), soldering material being interposed between the electric resistor and the slot.

## Description

The present invention relates to a heating plate particularly for cooking plates, frying pans, pasta cookers, fryers and devices for professional cooking in general.

As is known, heating plates are usually provided by means of a plate made of steel, stainless steel or the like, to which an electric resistor is connected.

Known solutions simply support the electrical resistors on the lower surface of the plate and connect them by means of U-shaped members or brackets.

With this type of solution, contact is ensured only at the brackets, and therefore there are large portions in which the resistors do not rest on the lower face of the plate and consequently heat losses occur and plate heating times are extended considerably.

In order to try to obviate this drawback, a solution has already been introduced commercially which creates, by compression, a flattened portion for the resistor in order to increase the surface of contact between the resistor and the plate. Moreover, the resistors are braze welded to the lower surface of the plate, increasing considerably the useful contact surface for transmission of the heat from the heating body to the plate.

This embodiment, which has proved to be valid in many respects, has been found to be susceptible to improvements especially as regards the possibility of increasing the region of contact between the electrical resistor and the lower face of the plate, thereby reducing heating times considerably.

The aim of the invention is to solve the problem described above, by providing a heating plate particularly for cooking plates, frying pans, pasta cookers, fryers and professional cooking devices in general in which it is possible to obtain a very rapid increase in the temperature of the plate without heat losses.

Within this aim, an object of the invention is to provide a heating plate that offers a prompter response of the heating system in case of surface cooling, which occurs typically when grilling food that is initially cold or contains large quantities of water.

Another object of the present invention is to provide a heating plate which, thanks to its particular constructive characteristics, is capable of ensuring highest reliability and safety in use.

Another object of the present invention is to provide a heating plate that can be obtained easily starting from commonly commercially available elements and materials and is also competitive from a merely economic point of view.

This aim, as well as these and other objects which will become better apparent hereinafter are achieved by a heating plate, particularly for cooking plates, frying pans, pasta cookers, fryers and professional cooking devices in general, according to the invention, which comprises a plate body, made of heat conducting material, on the face of which at least one electric resistor is connected, **characterized in that** it comprises, on said face, at least one slot for the at least partial accommodation of said at least one electric resistor, soldering material being interposed in at least some regions, between said at least one electric resistor and said at least one slot.

Further characteristics and advantages of the present invention will become better apparent from the description of a preferred but not exclusive embodiment of a heating plate particularly for cooking plates, frying pans, pasta cookers, fryers and professional cooking devices in general, illustrated by way of non-limiting example in the accompanying drawings, wherein:
Figure 1 is a schematic exploded perspective view of a heating plate with the corresponding electric resistors;
Figure 2 is a perspective view of the heating plate, taken from its lower face;
Figures 3 and 4 are transverse sectional views of the heating plate with slots at different depths;
Figures 5 and 6 are schematic views of plates having two different thicknesses;
Figure 7 is an enlarged-scale view of the detail of accommodation of the resistor in the slot with the soldering material interposed exclusively in the regions of contact;
Figure 8 is a sectional view of the plate with the soldering material between the resistor and the slot also in the filling regions;
Figure 9 is a view of a cooking plate with weight reduction slots;
Figure 10 is a view of a plate with polygonal slots;
Figure 11 is a view of a plate with a V-shaped slot.

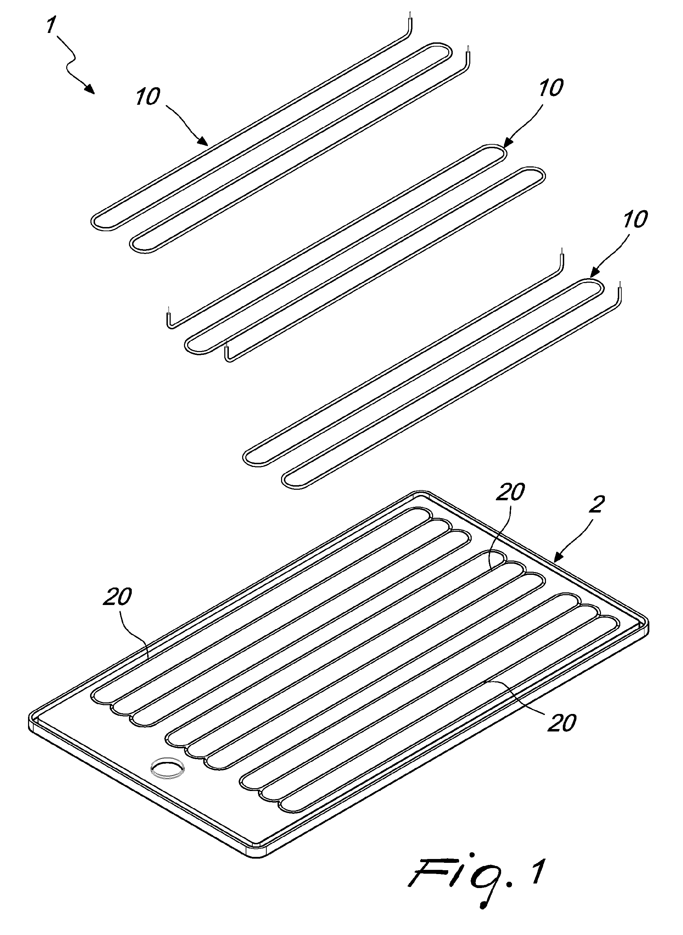

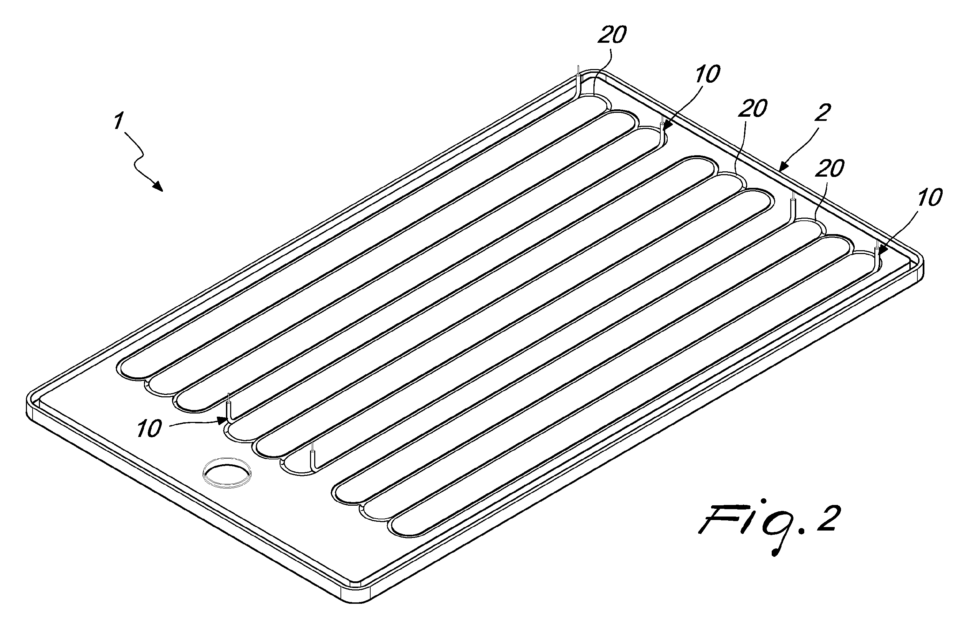

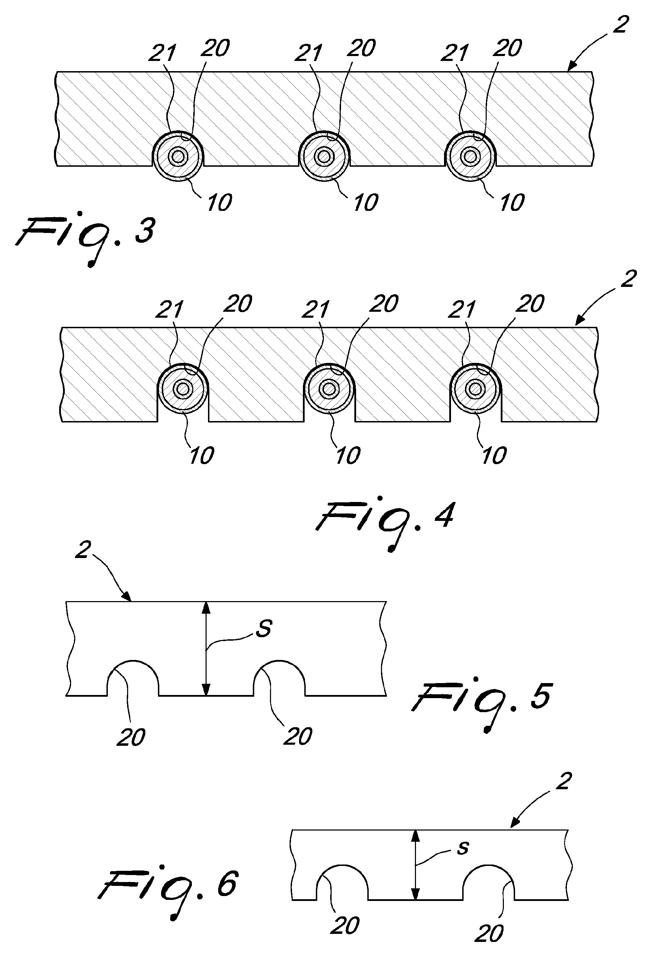

With reference to the figures and in particular to Figures 1 and 2, the heating plate according to the invention, generally designated by the reference numeral 1, comprises a plate body 2, which is preferably made of steel or stainless steel and can have any shape deemed appropriate and is advantageously provided with thicknesses S and s which advantageously can be comprised between 8 mm for the greatest thickness and 6 mm for the lowest thickness, as indicated schematically in Figures 5 and 6.

Electric heating resistors, generally designated by the reference numeral 10, are connected to the plate body and advantageously consist of tubular encased resistors with an outside diameter of preferably 4.2 mm and are coil-shaped; the resistors have an inner coil made of nickel-chrome which is separated, by means of an electrical insulator, from the stainless steel casing.

The peculiarity of the invention consist in that on the lower face of the plate body 2 slots 20 are provided, which are designed to at least partially accommodate the electrical resistor.

As shown in the drawing, the slots 20, shown in Figure 3, are substantially semicircular and accommodate the corresponding resistor approximately in half of its thickness, while the slots 20 shown in Figure 4 are deeper, with side walls which are perpendicular to the face of the plate body, and consequently accommodate the resistor over its entire diameter.

The choice between one solution and the other derives from the general structure, but nothing changes conceptually from a functional point of view.

The same remark is to be made for the thickness of the plate, since an excessive plate thickness can reduce even considerably the swiftness with which the temperature of the cooking surface is increased by the heating resistor and, for an equal absorbed electric power, one is able to heat the plate less; however, an excessively thin plate may be unable to offer a thermal inertia that is sufficient to keep the surface thereof warm even after the electric resistors have been switched off.

For increasing heat transmission between the slot 20 and the electric resistor 10, a layer of soldering material, designated by the reference 21, is interposed, and in addition to joining the resistor to the plate acts as an element of continuity for heat transmission.

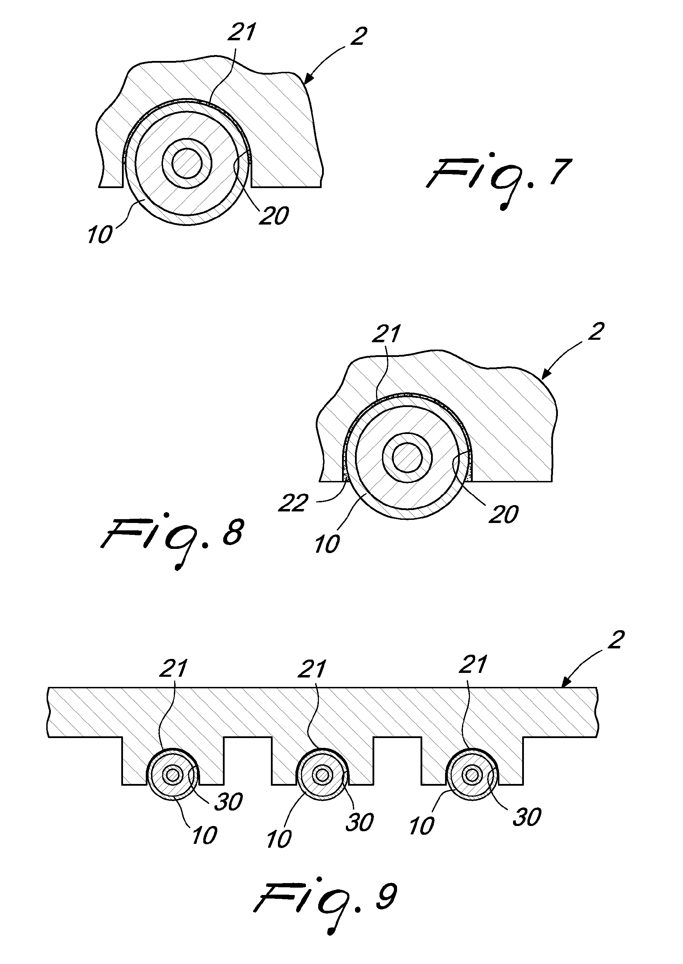

The soldering material, as shown in Figure 8, can also constitute a filler and is designated schematically by the reference numeral 22.

According to a solution shown in Figure 9, it is possible to provide, between the slots 20 for accommodating the resistor, weight reduction slots 30 designed to reduce the material of the plate, thus influencing the speed with which the plate body is heated and also its thermal inertia.

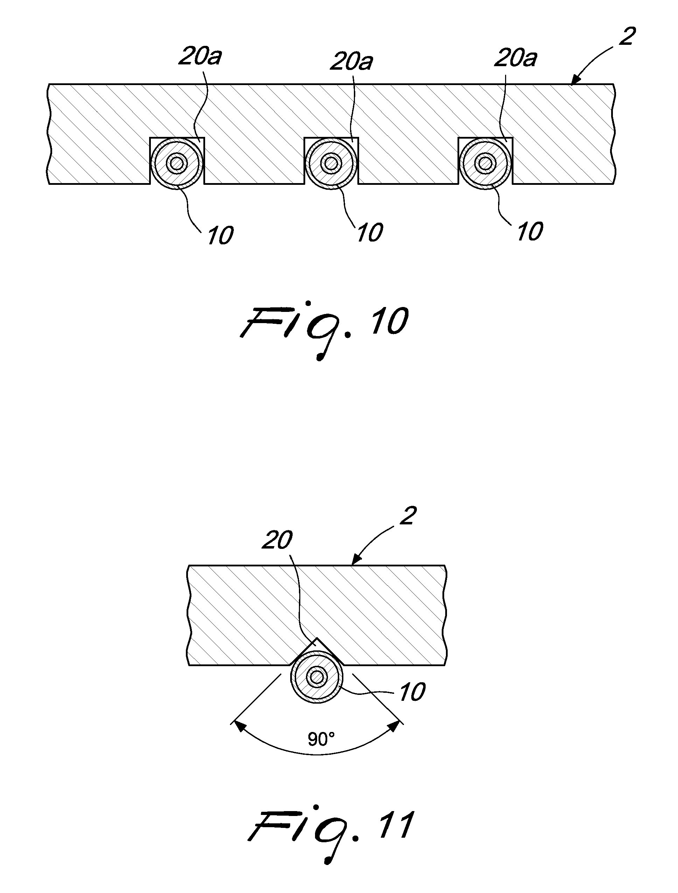

Conceptually, it is further possible to use different geometries for the slots and therefore the slot, as shown in Figure 10, can have a polygonal shape, designated by 20a, or a V-shaped slot, designated by 20b and shown in Figure 11; the V-shaped slot can have a vertex angle of different widths.

In all of the solutions introduced above, the element shared by all the solutions is in practice the at least partial embedding of the electric resistors in the plate body, jointly connecting them to the plate by applying the soldering material obtained by means of an appropriately provided nickel paste, with subsequent passing through an oven at 1050-1080°C, thus having the advantage of eliminating any compression or traction stresses that might be present in metals after machining processes and of creating a solid meniscus of nickel, which creates a continuous connection between the heating resistor and the plate.

From what has been described above it is evident that the invention achieves the proposed aim and objects, and in particular the fact is stressed that the proposed solution allows maximum optimization of the heating efficiency thanks to the fact that the heating time for the plate is reduced and consequently the activation time of the resistors is reduced, with obvious beneficial advantages in terms of electric power consumption.

The invention thus conceived is susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to requirements.

The disclosures in Italian Patent Application No. MI2008A002286 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A heating plate (1), particularly for cooking plates, frying pans, pasta cookers, fryers and professional cooking devices in general, comprising a plate body (2), made of heat conducting material, on one face of which at least one electric resistor (10) is connected, **characterized in that** it comprises, on said face, at least one slot (20) for the at least partial accommodation of said at least one electric resistor (10), a soldering material (21 and 22) being interposed in at least some regions between said at least one electric resistor and said at least one slot.

2. The heating plate according to claim 1, **characterized in that** said at least one slot (20) has, in transverse cross-section, a substantially circular cross-section.

3. The plate according to one or more of the preceding claims, **characterized in that** said at least one slot (20) has, in transverse cross-section, a semicircular portion that blends into walls which are substantially perpendicular to the plane of said face, for the substantially complete accommodation of said at least one electric resistor (10).

4. The heating plate according to one or more of the preceding claims, **characterized in that** said soldering material forms a layer (21) at the regions of contact between said at least one slot (20) and said at least one electric resistor (10).

5. The plate according to one or more of the preceding claims, **characterized in that** said layer of soldering material (22) constitutes a filler for at least one slot (20).

6. The heating plate according to one or more of the preceding claims, **characterized in that** it comprises weight reduction slots (30) on said plate body (2).

7. The heating plate according to one or more of the preceding claims, **characterized in that** said at least one slot has a polygonal shape in transverse cross-section (20a).

8. The heating plate according to one or more of the preceding claims, **characterized in that** said at least one slot is V-shaped in transverse cross-section (20b).
